# EUROPÄISCHE PATENTSCHRIFT

(11) **EP 1 109 710 B1**
(45) Veröffentlichungstag und Bekanntmachung des Hinweises auf die Patenterteilung: **19.03.2003**
(21) Anmeldenummer: 99936171.0
(22) Anmeldetag: 28.07.1999
(51) Int. Cl.: B62B 5/02

(54) **Sackkarren mit Treppensteigvorrichtung**
Stair climbing two-wheel hand truck
Chariot actionné manuellement pouvant monter des escaliers

(30) Priorität: 01.09.1998 AT 148298
(43) Veröffentlichungstag der Anmeldung: 27.06.2001
(73) Patentinhaber: Bierma, Jochum Ing., A-4040 Linz (AT)
(72) Erfinder: Bierma, Jochum Ing., A-4040 Linz (AT)
(74) Vertreter: Hübscher, Helmut, Dipl.-Ing.
(86) Internationale Anmeldenummer: AT9900189
(87) Internationale Veröffentlichungsnummer: WO00012371

(56) Entgegenhaltungen:
- DE-A- 19 519 109
- DE-C- 322 926

## Beschreibung

Die Erfindung bezieht sich auf einen Sackkarren mit einem ein unteres Laufradpaar und obere Handgriffe aufweisenden Tragrahmen und mit einer Hebevorrichtung zum Treppensteigen, die einen über einen Kurbeltrieb um eine zur Laufradachse parallele Schwenkachse schwenkverstellbaren, am freien Ende stützrollenbestückten Hubarm umfaßt, der sich aus einem um die Schwenkachse drehbar gelagerten Schwingführungsteil und einem gegenüber dem Schwingführungsteil längsverschiebbaren, die Stützrollen aufnehmenden Stützteil zusammensetzt, wobei der Kurbeltrieb mit seinem Kurbelarm am Stützteil angelenkt ist

Bei einem aus der EP 0 533 650 B bekannten Sackkarren weist die Hebevorrichtung zum Treppensteigen einen Hubarm auf, der in seinem Längsmittenbereich über ein Führungsglied in eine tragrahmenfeste Kulissenführung eingreift mit seinem den Stützrollen abgewandten Ende am Kurbelarm des Kurbeltriebes angelenkt ist. Durch Einund Ausschalten bzw. Umschalten des Antriebsmotors führen die Stützräder durch das Zusammenwirken von Hubarm, Kurbeltrieb und Kulissenführung eine vor- oder rückwärts ausholende Bewegung für das Befahren von Treppen aus. Diese Hebevorrichtung erfordert jedoch einen beträchtlichen Bauaufwand, was die Handhabbarkeit des Sackkarrens beeinträchtigt und dessen Eigengewicht erhöht.

Ein einfacher aufgebauter Sackkarren ist schließlich aus der DE 195 19 109 A bekannt. Die Hebevorrichtung dieses Sackkarrens weist einen im wesentlichen in Längsrichtung des Tragrahmens verlaufenden, um eine zur Laufradachse parallele Schwenkachse verschwenkbaren Hubarm auf, der sich aus einem um die Schwenkachse drehbar gelagerten Schwingführungsteil und einem gegenüber dem Schwingführungsteil längsverschiebbaren, Stützrollen tragenden Stützteil zusammensetzt. Da der Kurbeltrieb zum Betätigen des Hubarmes am Stützteil angreift, wird der Sackkarren über die nach unten gegenüber den Laufrädern absenkbaren Stützrollen gehoben, so daß der Sackkarren unabhängig von der jeweiligen Stufenhöhe um die volle Hubhöhe des Kurbeltriebes angehoben werden muß, bevor er auf die nächsthöhere Stufe abgesenkt werden kann, was nicht nur einen entspechend hohen Energieeinsatz erfordert, sondern auch Sicherheitsrisken mit sich bringt.

Der Erfindung liegt daher die Aufgabe zugrunde, einen Sackkarren der eingangs geschilderten Art so auszugestalten, daß ein sicheres, an die jeweilige Stufenhöhe angepaßtes Hochfahren einer Treppe möglich wird.

Die Erfindung löst diese Aufgabe dadurch, daß die Kurbelachse in Tragrahmenlängsrichtung oberhalb der Schwenkachse liegt.

Aufgrund des durch diese Maßnahme bedingten Verlaufes des Hubarmes im wesentlichen quer zur Tragarmlängsrichtung setzen bei einer der Fahrstellung entsprechenden Lage des Sackkarrens die Stützrollen zum Hochfahren einer Treppe greiferartig auf der jeweils nächsthöheren Treppenstufe auf, stützen sich ab und heben den Sackkarren von einer Stufe zur anderen an. Beim Absteigen hingegen bleiben die Stützrollen auf der jeweils oberen Stufe abgestützt und der Karren wird über den Hubarm zur nächsttieferen abgesenkt, so daß eine einfache und doch funktionssichere Hebe- bzw. Senkbewegung für ein automatisches Treppenbefahren entsteht Der Hubarm mit dem Kurbeltrieb läßt sich auf engem Raum ohne Schwierigkeiten, beispielsweise zwischen den Laufrädern des Sackkarrens, unterbringen und verändert dadurch die Schwerpunktlage des Sackkarrens nur unwesentlich.

Liegen die Kurbelachse in Tragrahmenlängsrichtung oberhalb und die Schwenkachse unterhalb der Laufradachse, so ergibt sich eine vorteilhafte Bewegungsabstimmung für die Stützrollen, wobei die Leerweg- und Scheitelbereiche schneller als die für das Treppenbefahren erforderlichen Hebe- bzw. Senkbereiche durchlaufen werden, insbesondere wenn der Abstand der Kurbelachse vom Tragrahmen größer als der der Schwenkachse und der Abstand der Laufradachse vom Tragrahmen größer als der der Kurbelachse sind.

Um die Montage der Hebevorrichtung zu erleichtern und auch nachträglich die Kurvenbahn für die Stützrollen verändern zu können, ist die Hebevorrichtung samt Kurbeltrieb und Hubarm als Montageeinheit ausgebildet und verstellbar am Tragrahmen befestigt, so daß sich die Montageeinheit problemlos mit wenigen Handgriffen montieren und dabei in ihrer Lage einstellen läßt, was zu einer Positionsänderung der Schwenk- und Kurbelachsen und damit zu einer Relatiwerschiebung der Kurvenbahn der Stützrollen führt.

Besonders vorteilhaft ist es, wenn die Stützrollen des Stützteiles mit einer kombinierten Freilauf- und Bremsvorrichtung ausgestattet sind, die eine Drehung der Stützrollen im Sinne einer Karrenrückwärtsfahrt freigibt, eine gegensinnige Drehung der Stützrollen aber bremst. Die Freigabe der Drehbewegung der Stützrollen in die eine Richtung und deren Bremsung statt eines Blokierens in Gegendrehrichtung erleichtert das Treppensteigen mit Hilfe der Hebevorrichtung, da so die Lage der Stützrollen auf den Treppen durch den Fahrer des Karrens mühelos korrigierbar bleibt, ohne aber die erforderliche Stützwirkung der Stützrollen zu verlieren.

### Kurze Beschreibung der Zeichnungen

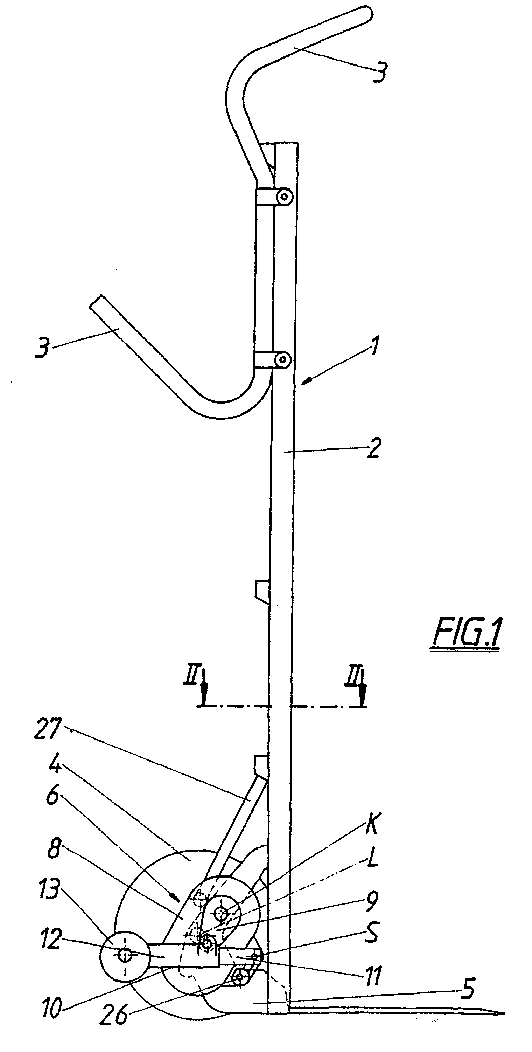

In der Zeichnung ist der Erfindungsgegenstand an Hand eines Ausführungsbeispieles rein schematisch veranschaulicht, und zwar zeigen
- Fig. 1: einen erfindungsgemäßen Sackkarren in Seitenansicht, wobei der Übersichtlichkeit halber das vordere Laufrad weggelassen ist,

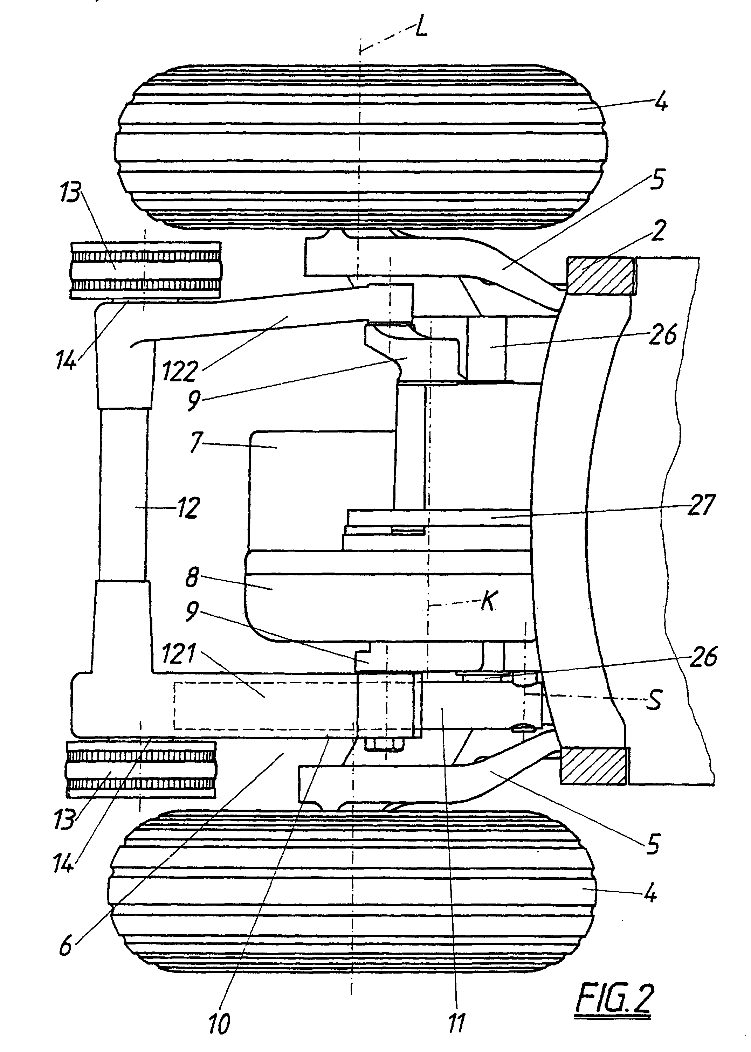

- Fig. 2: einen Querschnitt nach der Linie II-II der Fig. 1 größeren Maßstabes,
- Fig. 3: die Hebevorrichtung des erfindungsgemäßen Sackkarrens in Seitenansicht größeren Maßstabes mit einem Bewegungsschema und
- Fig. 4: eine Stützrolle der Hebevorrichtung im Axialschnitt größeren Maßstabes.

### Wege zur Ausführung der Erfindung

Ein stufengängiger Sackkarren 1 besteht aus einem Tragrahmen 2, der obere Handgriffe 3 zur Handhabung und untere Laufräder 4 zur bodenseitigen Abstützung aufweist. Die um eine horizontale Laufradachse L drehbaren Laufräder 4 lagern an seitlichen Laufradträgern 5, so daß innerhalb der Laufradträger Platz für die Anordnung einer Hebevorrichtung 6 zum Treppensteigen bleibt. Diese Hebevorrichtung 6 umfaßt einen über einen batteriegespeisten Antriebsmotor 7 betriebenen Kurbeltrieb 8, dessen Kurbelarm 9 an einem Hubarm 10 angelenkt ist. Der Hubarm 10 setzt sich dabei aus einem um eine zur Laufradachse L parallele Schwenkachse S drehbar gelagerten Schwingführungsteil 11 und einem gegenüber diesem Schwingführungsteil 11 längsverschiebbaren Stützteil 12 zusammen, an dem der Kurbelarm 9 des Kurbeltriebes 8 angreift und an dessen freiem Ende Stützrollen 13 sitzen.

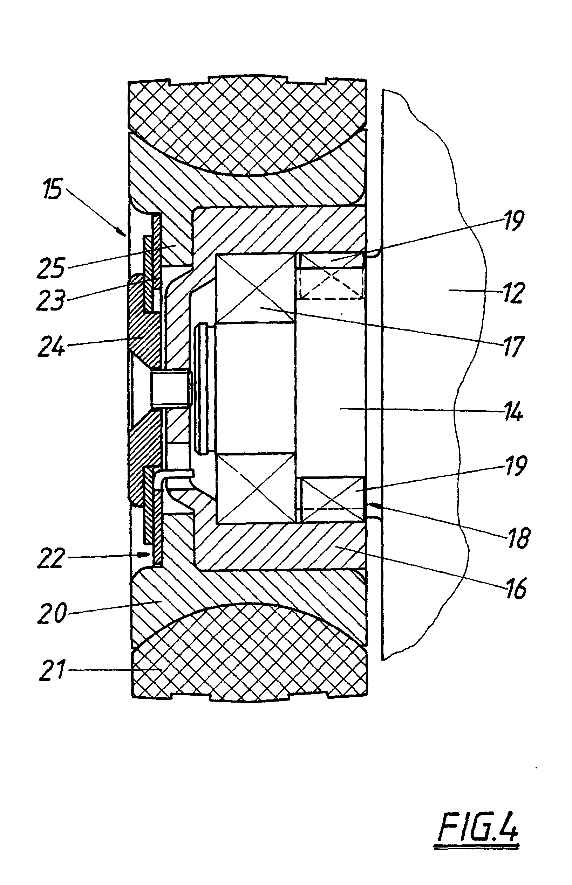

Im dargestellten Ausführungsbeispiel ist der Stützteil 12 bügelförmig ausgebildet und der Kurbeltrieb 8 ist mit paarweise angeordneten Kurbelarmen 9 an den beiden Schenkeln 121, 122 des Stützteiles 12 angelenkt. Allerdings wird nur der eine Schenkel 121 des Stützteiles 12 längsverschiebbar auf dem stangenförmigen Schwingführungsteil 11 geführt. Die Stützrollen 13 sitzen im Endbereich beider Bügelschenkel 121, 122 auf Achsstummeln 14, wobei jede Stützrolle 13 mit einer kombinierten Freilauf- und Bremsvorrichtung 15 ausgestattet ist. Dazu lagert, wie in Fig. 4 veranschaulicht, eine Radnabe 16 einerseits über ein Rollenlager 17, anderseits über einen Freilauf 18 auf dem stützteilfesten Achsstummel 14, so daß der Freilauf 18 die Radnabe 16 in der einen Drehrichtung, das ist hier im Sinne einer Karrenrückwärtsfahrt, freigibt, in der anderen Drehrichtung hingegen durch ein Verklemmen mit dem Achsstummel 14 sperrt. Dieser Freilauf 18 ist in üblicher Weise mit Klemmrollen 19 ausgestattet und bedarf daher keiner weiteren Erläuterung. Auf der Radnabe 16 sitzt nun relativverdrehbar ein Radkranz 20 mit einem geeigneten Radreifen 21, welcher Radkranz 20 über eine Bremse 22 kraftschlüssig mit der Radnabe 16 in Verbindung steht. Die Bremse 22 besteht aus einer gegenüber der Radnabe 16 drehfesten Bremsscheibe 23, die mittels einer federnden Spanneinrichtung 24 gegen einen Ringansatz 25 des Radkranzes 20 mit einer bestimmten Vorspannung angedrückt wird, so daß bei Überwindung der auftretenden Reibungskräfte eine Relatiwerdrehung zwischen Radkranz 20 und Bremsscheibe 23 bzw. Radnabe 16 möglich ist. Wird daher die Stützrolle 13 im Sperrsinn des Freilaufes 18 gedreht, blockiert die Radnabe 16 gegenüber dem Achsstummel 14 und es hängt nun vom aufzunehmenden Drehmoment ab, ob der Radkranz 20 mit dem Radreifen 21 gegenüber der Radnabe 16 unter der Wirkung der Bremse 22 drehfest bleibt oder eine gebremste Drehbewegung ausführt.

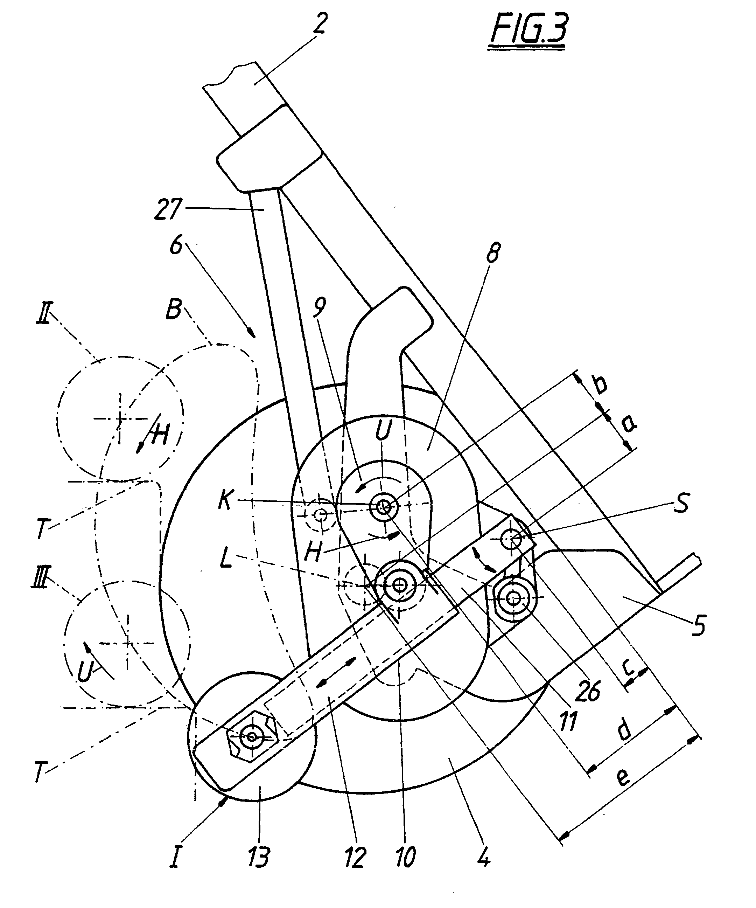

Wie in Fig. 3 angedeutet, ergibt das Zusammenspiel von Kurbeltrieb 8 einerseits und Hubarm 10 mit dem auf dem Schwingführungsteil längsverschiebbaren Stützteil 12 anderseits für die am freien Stützteilende sitzenden Stützrollen 13 eine aufgerichtete, im wesentlichen nierenförmige Bewegungsbahn B, die beim Treppensteigen im Leerhub die Stützrollen 13 am Treppenprofil vorbeibewegt, beim Arbeitshub aber auf den jeweiligen Treppen aufsetzt und dann den Sackkarren 1 anhebt bzw. absenkt. Gemäß Fig. 3 befindet sich der Sackkarren 1 in seiner Treppen-Fahrstellung, wobei der Hubarm 10 in seiner Ausgangsstellung etwa normal zum Tragrahmen 2 gerichtet ist (Position I). Soll nun mit dem Sackkarren 1 eine Treppe hochgefahren werden, wird der Sackkarren 1 an die Treppe herangebracht und der Kurbeltrieb 8 in Drehrichtung der Bewegungspfeile H eingeschaltet, so daß die Stützrollen 13 entlang der Kurvenbahn B zuerst zurückgezogen und dann hochbewegt und schließlich auf der nächsthöheren Treppe T aufgesetzt (Position II) werden, wodurch ein Weiterschwenken des Hubarmes 12 den ganzen Sackkarren über das Treppenprofil hinweg zur nächsthöheren Treppenstufe T anhebt. Die Freilauf-Bremseinrichtung 15 der Stützrollen 13 verhindert dabei ein ungewolltes Zurückrollen der Stützrollen treppabwärts, sie erlaubt aber jederzeit ein zusätzliches Hochziehen des Karrens treppaufwärts.

Beim Treppabfahren wird der Sackkarren 1 auf einer oberen Treppenstufe T mit den Laufrädern 4 soweit über die Treppenkante gefahren, bis die Stützrollen 13 auf der Stufe T aufsetzen und durch die Belastung den Antrieb des Kurbeltriebes 8 einschalten, der drehzahlgeregelt den Hubarm 12 im Sinne der Bewegungspfeile U bewegt (Position III). Dadurch senkt die Hebevorrichtung 6 den Sackkarren 1 von einer Stufe zur anderen ab, wobei auf Grund der Bewegungsbahn B der Stützrollen 13 der Sackkarren um die Stufenkanten herumbewegt wird. Auch hier erleichtert die Freilauf-Bremseinrichtung 15 der Stützrollen 13 das Abwärtsbewegen des Sackkarrens.

Eine günstige Form und Lage der Bewegungsbahn B für die Stützrollen 13 ergibt sich, wenn in Längsrichtung des Tragrahmens 2 die Schwenkachse S mit Abstand a unterhalb der Laufradachse L und die Kurbelachse K mit Abstand b oberhalb der Laufradachse L liegen und wenn der Abstand d der Kurbelachse K vom Tragrahmen 2 größer ist als der c der Schwenkachse S und der Abstand e der Laufradachse L vom Tragrahmen 2 größer ist als der d der Kurbelachse K.

Zur Beeinflussung der Relativlage der Bewegungsbahn B ist die Hebevorrichtung 6 samt Kurbeltrieb 8 und Hubarm 10 als Montageeinheit verstellbar angeordnet, beispielsweise über ein Schwenklager 26 und eine längsverstellbare Stützstrebe 27 am Tragrahmen 2 schwenkverstellbar befestigt, so daß sich durch ein Schwenkverstellen dieser Montageeinheit auch die Bewegungsbahn relativ zum Tragrahmen ändert.

## Patentansprüche

1. Sackkarren (1) mit einem ein unteres Laufradpaar (4) und obere Handgriffe (3) aufweisenden Tragrahmen (2) und mit einer Hebevorrichtung (6) zum Treppensteigen, die einen über einen Kurbeltrieb (8) um eine zur Laufradachse (L) parallele Schwenkachse (S) schwenkverstellbaren, am freien Ende stützrollenbestückten Hubarm (10) umfaßt, der sich aus einem um die Schwenkachse (S) drehbar gelagerten Schwingführungsteil (11) und einem gegenüber dem Schwingführungsteil (11) längsverschiebbaren, die Stützrollen (13) aufnehmenden Stützteil (12) zusammensetzt, wobei der Kurbeltrieb (8) mit seinem Kurbelarm (9) am Stützteil (12) angelenkt ist, **dadurch gekennzeichnet, daß** die Kurbelachse (K) in Tragrahmenlängsrichtung oberhalb der Schwenkachse (S) liegt.

2. Sackkarren nach Anspruch 1, **dadurch gekennzeichnet, daß** die Kurbelachse (K) in Tragrahmenlängsrichtung oberhalb und die Schwenkachse (S) unterhalb der Laufradachse (4) liegen.

3. Sackkarren nach Anspruch 1 oder 2, **dadurch gekennzeichnet, daß** der Abstand (d) der Kurbelachse (K) vom Tragrahmen (2) größer ist als der (c) der Schwenkachse (S) und der Abstand (e) der Laufradachse (L) vom Tragrahmen (2) größer als der (d) der Kurbelachse (K).

4. Sackkarren nach einem der Ansprüche 1 bis 3, **dadurch gekennzeichnet, daß** die Hebevorrichtung (6) samt Kurbeltrieb (8) und Hubarm (12) als Montageeinheit ausgebildet und verstellbar am Tragrahmen (2) befestigt ist.

5. Sackkarren nach einem der Ansprüche 1 bis 4, **dadurch gekennzeichnet, daß** die Stützrollen (13) des Stützteiles (12) mit einer kombinierten Freilauf- und Bremsvorrichtung (15) ausgestattet sind, die eine Drehung der Stützrollen (13) im Sinne einer Karrenrückwärtsfahrt freigibt, eine gegensinnige Drehung der Stützrollen (13) aber bremst.

## Claims

1. A sack truck (1) with a carrier frame (2) comprising a bottom pair of wheels (4) and top handles (3) and with a lifting device (6) for climbing stairs, said lifting device comprising a lifting arm (10) which by means of a crank drive (8) is pivotable about a pivot axis (S) parallel to the wheel axis (L), said lifting arm (10) being equipped with support rollers at the free end and being made up of a swing guide part (11) mounted to be rotatable about the pivot axis (S) and a support part (12) which is longitudinally displaceable relatively to the swing guide part (11) and which accommodates the support rollers (13), the crank drive (8) being articulated by its crank arm (9) on the support part (12), **characterised in that** the crank axis (K) is situated above the pivot axis (S) in the longitudinal direction of the carrier frame.

2. A sack truck according to claim 1, **characterised in that** in the longitudinal direction of the carrier frame the crank axis (K) is situated above and the pivot axis (S) below the wheel axis (4).

3. A sack truck according to claim 1 or 2, **characterised in that** the distance (d) of the crank axis (K) from the carrier frame (2) is greater than the distance (c) of the pivot axis (S) and the distance (e) of the wheel axis (L) from the carrier frame (2) is greater than the distance (d) of the crank axis (K).

4. A sack truck according to any one of claims 1 to 3, **characterised in that** the lifting device (6) together with the crank drive (8) and the lifting arm (12) is constructed as an assembly unit and is fixed adjustably on the carrier frame (2).

5. A sack truck according to any one of claims 1 to 4, **characterised in that** the support rollers (13) of the support part (12) are equipped with a combined free-wheel and braking device (15) which releases rotation of the support rollers (13) in the direction of reverse cart travel but brakes contra-directional rotation of the support rollers (13).

## Revendications

1. Chariot (1) comportant un cadre support (2) présentant une paire de roues de déplacement inférieure (4) et des poignées supérieures (3), et avec un dispositif de levage (6) pour monter des escaliers, qui comprend un bras de levée (10) muni de galets d'appui à l'extrémité libre, bras de levée réglable en pivotement par l'intermédiaire d'une transmission à manivelle (8), autour d'un axe de pivotement (S) parallèle à l'axe de roue de déplacement (L), le bras de levée (10) se composant d'une partie de guidage oscillant (11), montée à rotation autour de l'axe de pivotement (S), et d'une partie d'appui (12) recevant les galets d'appui (13) déplaçable, longitudinalement, par rapport à la partie de guidage oscillant (11), la transmission à manivelle (8) étant articulée, avec son bras de manivelle (9), sur la partie d'appui (12), **caractérisé par le fait que** l'axe de manivelle (K) est placé au-dessus de l'axe de pivotement (S) en observant dans la direction longitudinale du cadre support.

2. Chariot selon la revendication 1, **caractérisé par le fait que** l'axe de manivelle (K), dans la direction longitudinale du cadre support, est situé au-dessus de l'axe de roue de déplacement (4) et l'axe de pivotement (S) est situé au-dessous de celui-ci.

3. Chariot selon la revendication 1 ou 2, **caractérisé par le fait que** l'espacement (d) de l'axe de manivelle (K), par rapport au cadre support (2), est supérieur à l'espacement (c) de l'axe de pivotement (S), et l'espacement (e) de l'axe de roue de déplacement (L), par rapport au cadre support (2), est supérieur à l'espacement (d) de l'axe de manivelle (K).

4. Chariot selon l'une des revendications 1 à 3, **caractérisé par le fait que** le dispositif de levage (6), avec la transmission à manivelle (8) et le bras de levée (12), est réalisé sous la forme d'ensemble de montage et fixé de façon réglable sur le cadre support (2).

5. Chariot selon l'une des revendications 1 à 4, **caractérisé par le fait que** les galets d'appui (13) de la partie d'appui (12) sont munis d'un dispositif combiné de roue libre et de freinage (15), qui libère la rotation des galets d'appui (13) dans le sens d'un déplacement en marche arrière du chariot, mais freine une rotation en sens inverse des galets d'appui (13).
